# EUROPEAN PATENT APPLICATION

(11) **EP 4 116 111 A1**
(43) Date of publication of application: **11.01.2023**
(21) Application number: 22175282.7
(22) Date of filing: 25.05.2022
(51) Int. Cl.: B60C 15/00, B60C 9/02, B60C 9/04

(54) **THE PNEUMATIC TIRE**

(30) Priority: 09.07.2021 KR 20210090406
(71) Applicant: Kumho Tire Co., Inc., Gwangju 62392 (KR)
(72) Inventor: PARK, Byung Chul, 54-26, Yeomun 2-ro, Yeosu-si, Jeollanam-do, 59703 (KR); SHIN, Gwan Su, 215-21, Saeun-ro, Giheung-gu, Yongin-si, Gyeonggi-do, 17076 (KR)
(74) Representative: Byrne, Declan

(57) **Abstract**

The present invention provides a pneumatic tire in which a steel cord carcass ply composed of an ultrafine wire having a filament diameter of 0.15 mm or less is used as a reinforcing material, and the carcass ply is positioned between the bead cords without turn-up of the carcass ply for turning up it through an annular bead bundle on an upper side of the carcass ply, such that side rigidity is maintained even when replacing two conventional fiber carcass plies with one steel carcass. Thereby, rather than the conventional turn-up method of turning up the carcass ply on the upper side of the annular bead bundle, the carcass ply passes through the bead bundles as shown in FIG. 3, such that a deformation energy of the bead portion is minimized and a rolling resistance is maximized. The tire of the present invention is characterized by satisfying a correlation equation between a height Bh1 of an inner bead bundle position and a height Ah of the bead portion including an apex of 1.2< Ah/Bh1 < 4.5.

## Description

### CROSS REFERENCE TO RELATED APPLICATIONS

This application claims the priority benefit of Korean Patent Application No. 10-2021-0090406 filed on July 09, 2021, the entirety of which is incorporated by reference herein.

### BACKGROUND OF THE INVENTION

### 1. Field of the Invention

The present invention relates to a pneumatic tire for an electric vehicle, and more particularly, to a pneumatic tire having a steel carcass ply, in which a bead portion is designed without turn-up of the carcass ply in the bead portion, such that a rolling resistance of the tire is dramatically improved, as well as a safety factor of a carcass ply layer and a steering stability of the vehicle are improved compared to a conventional tire to which the fiber carcass ply or steel carcass is applied in a turned-up manner.

### 2. Description of the Related Art

Unless otherwise indicated herein, the contents described in this section are not prior art to the claims of the present application, and inclusion in this section is not admitted to be the prior art.

A pneumatic radial tire for a passenger car has an inner liner rubber layer configured to prevent air injected into an inner layer from escaping, and one or two layers of carcass ply made of materials such as polyester, rayon, and nylon, etc. are placed thereon. The pneumatic tire is manufactured including the steps of: turning up the carcass ply on an upper side of the carcass ply through an annular bead bundle to complete a turn-up; placing a belt ply layer reinforced with one to four layers composed of steel cord or organic fiber cord such as aramid on an outside of the carcass ply layer in a tread portion; applying tread rubber to the belt ply layer; and reinforcing the outside of the carcass ply with a bead reinforcement filler, a rim flange, and a nylon or steel chafer in the bead portion.

As a carcass ply used in the conventional pneumatic tire, a polyester cord having strength with a unit cost suitable for manufacturing the tire is well usefully used. Recently, as the traditional internal combustion engine vehicle is replaced by the electric vehicle, it has to be designed in such a way that the zero-back performance of the vehicle is improved, and rubber volumes of the side portion and tread portion according to the low-weight design are reduced along with efforts to reduce a rolling resistance of the tire, which have a large influence on fuel efficiency of the vehicle. Accordingly, it is necessary to use a carcass with high fiber denier or two fiber carcasses to improve riding comfort and controllability during high-speed driving. However, in this case, weight reduction and rolling resistance effects are decreased. In addition, a rayon cord having a high modulus and a small change in cord properties in response to heat may be used as an effective means in tire design. However, since the rayon cord has low cutting strength, it is necessary to increase diameters of the cord and rubber or increase the number of carcass plies in order to maintain durability performance of the tire. Therefore, the rayon cord also has a limitation on design for securing improved durability and reducing the rolling resistance, which are important characteristics of the tire for an electric vehicle.

By comparison, the steel cord has a high modulus, and there is no change in physical properties in response to heat and moisture. Therefore, when using it as a material for reinforcing the carcass ply, performances such as handling, flat spot, and riding comfort of the radial pneumatic tire for a passenger car may be improved, and the weight of the carcass ply layer may be reduced. In addition, since there is no loss in modulus value of viscoelastic properties derived from the material characteristics of the fiber cord itself, it is possible to improve the fuel efficiency of the vehicle due to a reduction in the rolling resistance. However, compared to the fiber carcass ply, the turn-up itself is not possible in the turn-up process of molding where the carcass ply is turned-up through the bead, or high ply tension acts on the bead portion even if the tire is manufactured. Therefore, since the strength of the tire should be reinforced by increasing the rubber thickness of the sidewall or rim flange, the overall weight of the tire is increased, which acts as a limit to design of the tire.

To solve these problems, Korean Patent Registration No. 10-0550287 proposes a radial pneumatic tire having a steel cord for reinforcement of the carcass ply applied thereto, which has technical characteristics that the steel cord includes: one piece of steel core wire; and four to seven pieces of steel core wire twisted spirally on the outer circumference of the one piece of steel core wire in an axial direction and having a wire diameter of 0.04 to 0.14 mm thinner than the one piece of steel core wire, wherein the final diameter of the stranded wire is 0.2 to 0.5 mm, and the breaking strength is 25 to 35 kgf. The tire to which the above-described prior art is applied has many performance advantages such as improved steering stability due to high sidewall stiffness, excellent uniformity of the tire in terms of bulge or dent, and improved riding comfort, etc. In addition, even if the temperature is increased due to heat generated during driving, since there is no change in the physical properties of the cord, the performance of the tire is not deteriorated even when running for a long period of time. However, according to the tire structure designed by engineers who favor steering stability, the tread width is widened and the rim diameter is increased, such that an aspect ratio of the tire is lowered. As a result, a tire including a carcass reinforcing layer of ultrafine steel cord has a manufacturing defect in which the carcass turn-up portion is delaminated during molding and vulcanization, and the delamination problem might more easily occur in a tire having a low turn-up height. In this case, since the tire has a problem in that the bead durability performance is rapidly decreased, the use of an ultra-fine steel cord as a material for reinforcing the carcass has been limited in the tire having a low carcass turn-up height due to a low aspect ratio.

In addition, Korean Patent Registration No. 10-1601202 discloses an antistatic tire which suppresses an occurrence of carcass ply delamination according to carcass turn-up. However, due to a design that satisfies the relationship between a bending strength of the carcass ply, an adhesive force of the ultrafine wire ply, and the rigidity of the rim flange so that the ultra-fine steel cord ply can be used even in the tire having a low aspect ratio, there are a limitation on design for the use of high-elasticity and low-heating rim flange rubber for lowering the rolling resistance, and a limitation on design for alleviating the stress concentration phenomenon in the side portion for reducing the rolling resistance because it has the turn-up structure like existing tires. In addition, the turn-up portion of the carcass ply is delaminated depending on a leaving time of the green case, and thereby, there is a limitation on the manufacturing yield due to an occurrence of air intake defect.

### Prior Art Document

### [Patent Documents]

(Patent Document 0001) Korean Patent Registration Publication No. 10-0550287 (published on February 08, 2006)
(Patent Document 0002) Korean Patent Registration Publication No. 10-1601202 (registered on March 3, 2016)

### SUMMARY OF THE INVENTION

In consideration of the above-mentioned circumstances, it is an object of the present invention to provide a pneumatic tire for an electric vehicle, which may overcome limitations on trade-off relationship that causes a reduction in the rolling resistance while improving the durability and driving performance of the tire compared to the tire designed by the conventional method.

In addition, it is not limited to the technical problems as described above, and it is obvious that another technical problem may be derived from the following description.

According to one aspect of the present invention, there is provided a pneumatic tire including a carcass ply, wherein the carcass ply is formed between an inner liner and a sidewall of the tire in an extended manner while penetrating a bead portion.

According to a preferred characteristic of the present invention, the bead portion may include an inner bead bundle which is in contact with the inner liner about the carcass ply, and an outer bead bundle which is formed on a side opposite to the inner bead bundle.

According to a preferred characteristic of the present invention, Ah/Bh1, which is a ratio of a height Bh1 of the inner bead bundle to a height Ah of an apex, may be 1.2 to 4.5.

According to a preferred characteristic of the present invention, the carcass ply may include a steel cord composed of an ultrafine wire having a filament diameter of 0.15 mm or less, wherein the steel cord may have a breaking strength of 25 kgf or more.

According to the present invention, there are advantages in which limitations on the trade-off relationship that causes a reduction in the rolling resistance may be overcome while improving the durability and driving performance of the tire, that is, the rolling resistance may be lowered and the driving performance may be improved through enhancement of the stiffness of the side portion, as compared to the tire designed by the conventional method.

The effects of the present invention are not limited to the above advantages, and those skilled in the art should understand that it includes all effects that may be deduced from the detailed description of the present invention or the configurations of the invention described in the claims.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a cross-sectional view of a bead portion of a pneumatic tire manufactured by a conventional turn-up method of turning up a carcass ply with two fiber carcass plies through an annular bead bundle on an upper side of the ply;
FIG. 2 is a cross-sectional view of a bead portion of a pneumatic tire manufactured by a conventional turn-up method of turning up a carcass ply with one steel carcass ply through an annular bead bundle on an upper side of the ply; and
FIG. 3 is a cross-sectional view of a bead portion prepared according to an embodiment of the present invention without turn-up of the steel carcass ply.

### DETAILED DESCRIPTION OF THE INVENTION

Hereinafter, configurations, operations, and effects of a pneumatic tire according to a preferred embodiment will be described with reference to the accompanying drawings. For reference, in the drawings described below, each component is omitted or schematically illustrated for convenience and clarity, and the size of each component does not reflect an actual size. In addition, the same reference numerals are denoted to the same components throughout the specification, and reference numerals for the same components in individual drawings will be omitted.

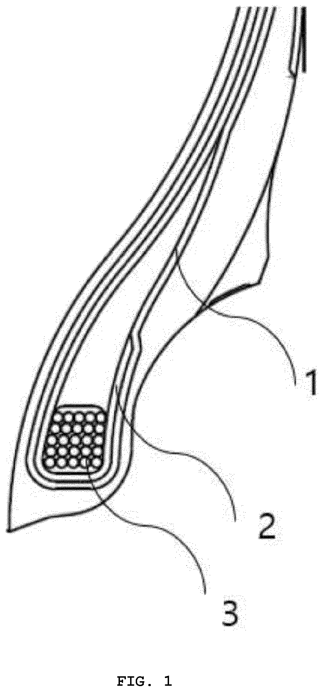

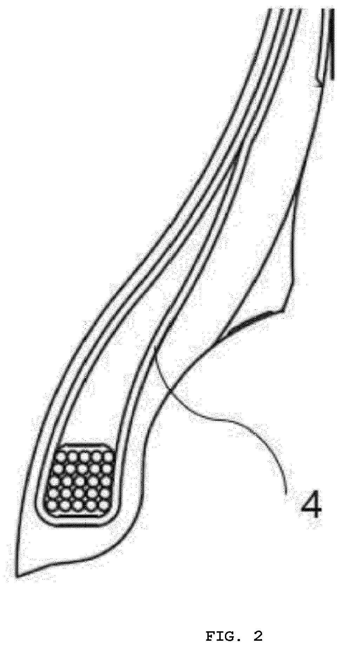

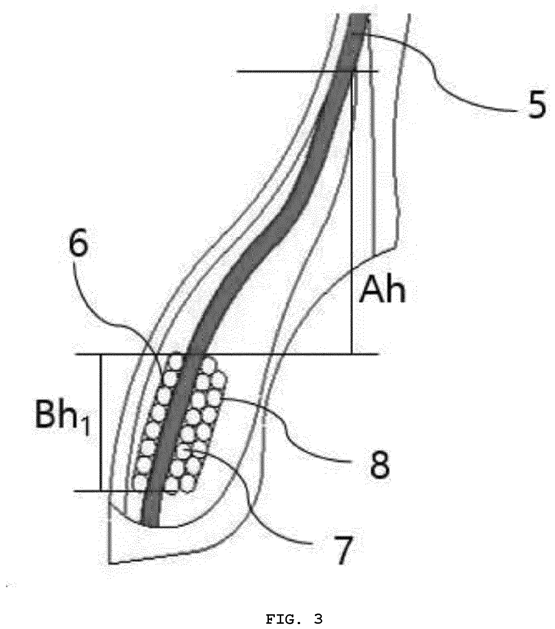

A pneumatic tire for an electric vehicle according to the present invention includes a steel carcass ply, and is characterized in that, rather than the conventional turn-up method of turning up the carcass ply through an annular bead bundle on an upper side of the fiber carcass ply or steel carcass ply as shown in FIGS. 1 and 2, the steel carcass ply layer is positioned between one to two layered-flat inner bead bundles which are in contact with an inner portion and one to five layered-stacked outer bead bundles without turn-up of the carcass ply in a bead portion, as shown in FIG. 3.

In the pneumatic tire according to an embodiment of the present invention, the pneumatic tire including a carcass ply 5 is characterized in that the carcass ply 5 is formed between an inner liner and a sidewall of the tire in an extended manner while penetrating the bead portion.

In the present invention, the turn-up process itself may be omitted compared to the conventional method in which molding is performed in a turn-up method of turning up fiber carcass plies 1 and 2 or a steel carcass ply 4 through an annular bead bundle 3 as shown in FIG. 1 or 2. More specifically, rather than having a structure in which the carcass is turned up and wrapped about the bead bundle, the carcass ply 5 may be formed between the inner liner and the sidewall in an extended manner while penetrating the bead portion.

Herein, the bead portion may be formed by dividing it into an inner bead bundle 6 which is in contact with an inner liner layer about the carcass ply 5 and outer bead bundles 7 and 8 positioned on a side opposite to the inner bead bundle 6. In the inner bead bundle 6 and the outer bead bundle 7 and 8, as shown in FIG. 3, the inner bead bundle 6 may be formed in one to two layers, and the outer bead bundles 7 and 8 may be formed in one to five layers. Herein, the bead may be prepared by an annular bead bundle or a steel cord composed of a plurality of layers, or may be an integral type bead formed in a rectangular shape. In addition, the inner bead bundle 6 serves to support an inner surface of the carcass ply 5, and the outer bead bundle 7 serves to support an apex installed above the same.

According to a preferred characteristic of the present invention, the carcass ply 5 may include a steel cord composed of an ultra-fine wire having a filament diameter of 0.15 mm or less, wherein the steel cord may have a breaking strength of 25 kgf or more.

First of all, FIGS. 1 and 2 are cross-sectional views illustrating the bead portion of a pneumatic tire prepared by the conventional turn-up method of turning up the carcass ply with two fiber carcass plies or one steel carcass ply through an annular bead bundle on an upper side of the ply, which are the prior art and comparative examples for the present invention.

Hereinafter, physical properties of the pneumatic tires according to the present invention and the comparative examples will be compared.

First, weights and rolling resistances of the pneumatic tire prepared by turning up two fiber carcass plies or one steel carcass ply as Comparative Examples 1 and 2, and the pneumatic tire including the steel carcass ply prepared without turn-up according to an embodiment of the present invention as Example 1 were measured, and results thereof are shown in Table 1 below.

**[TABLE 1]**

| Item | Comparative Example 1 | Comparative Example 2 | Example 1 |
|---|---|---|---|
| Carcass ply | 1300D/2P | 2+7*0.095 | 2+7*0.095 |
| breaking strength (kgf) | 20.2 | 28.4 | 26.5 |
| Number of plies | Two plies | One ply | One ply |
| Bead portion | With turn-up | With turn-up | No turn-up |
| Tire weight (Index) | 100 | 94 | 92 |
| Rolling resistance (Index) | 100 | 103 | 110 |

From Table 1 above, it can be confirmed that the weight and the rolling resistance of the pneumatic tire to which the steel carcass ply is applied without turn-up of the carcass ply in the bead portion are significantly improved.

Next, the weights and the rolling resistance values, a force & moment value, which is one of the alternative characteristics of the tire driving performance, and driving performance sensitivity of the pneumatic tire prepared by turning up two fiber carcass plies or one fiber carcass ply as Comparative Examples 3 and 4, and the pneumatic tire including the steel carcass ply prepared without turn-up according to an embodiment of the present invention as Example 1 were measured and evaluated, and results thereof are shown in Table 2 below.

**[TABLE 2]**

| Item | | Comparative Example 1 | Comparative Example 2 | Example 1 |
|---|---|---|---|---|
| Carcass ply | | 1300D/2P | 1300D/2P | 2+7*0.095 |
| Number of plies | | Two plies | One ply | One ply |
| Bead portion | | With turn-up | With turn-up | No turn-up |
| Tire weight (Index) | | 100 | 87 | 92 |
| Rolling resistance (Index) | | 100 | 109 | 110 |
| Force & Moment (Index) | CC (1°) | 100 | 89 | 103 |
| | ATC (1°) | 100 | 90 | 102 |
| Results of driving performance sensitivity evaluation (Index) | Ride | 100 | 95 | 101 |
| | Handling | 100 | 92 | 105 |
| | Noise | 100 | 97 | 102 |

As shown in Table 2 above, it can be confirmed that when reducing two fiber carcass plies to one, the weight and the rolling resistance are improved, but the force & moment value is significantly reduced due to a decrease in the stiffness of the side portion. However, from the tire of Example 1, to which one steel carcass ply is applied without turn-up, it can be seen that the driving performance was significantly improved through an enhancement of the rolling resistance together with an improvement of the side rigidity.

Further, the following Table 3 shows evaluation results of fraction defective in air intake of apex generated when the tire having the above-described structure of Comparative Examples 3 and 4 and the tire having the structure of Example 1 were molded and vulcanized.

**[TABLE 3]**

| Item | | Comparative Example 3 | Comparative Example 4 | Example 1 |
|---|---|---|---|---|
| Carcass ply | | 1300D/2P | 2+7*0.095 | 2+7*0.095 |
| Number of plies | | Two plies | One ply | One ply |
| Bead portion | | With turn-up | With turn-up | No turn-up |
| Number of evaluation samples | | 90 samples | 90 samples | 90 samples |
| Fraction defective in air intake for each leaving time of green case | Left for one day (30 samples) | 0% | **6.6%(2)** | 0% |
| | Left for three days (30 samples) | 0% | **16.6%(5)** | 0% |
| | Left for five days (30 samples) | 0% | **23.3%(7)** | 0% |

Commonly, a fraction defective in manufacture of the tire is maintained at a level of 0.5% or less. When a tire is manufactured in a form having a bead turn-up with the steel carcass ply, the tire exhibits a fraction defective of 130 times or more than the fraction defective of the normal tire, and it can be confirmed that the fraction defective is more rapidly increased as the leaving time of the green case is increased. Therefore, in comparison with the effect of reducing the rolling resistance while improving the durability and driving performance of the tire compared to the fiber cord, which is the advantage of the tire to which the steel carcass ply is applied, it should take a decrease in the manufacturing yield in an aspect of mass production while the fraction defective in manufacture is significantly increased. However, it can be confirmed that the pneumatic tire to which the steel carcass ply is applied without turn-up of the carcass ply as disclosed in the present invention exhibits the same manufacturing yield as that of the conventional pneumatic tire prepared by turning up the fiber carcass ply.

Further, according to a preferred characteristic of the present invention, Ah/Bh1, which is a ratio of a height Bh1 of the inner bead bundle 6 to a height Ah of the apex, may be 1.2 to 4.5.

Referring to FIG. 3, the carcass ply 5 is formed between the inner bead bundle 6 and the outer bead bundles 7 and 8 in an extended manner so as to penetrate therebetween. When the height of the inner bead bundle 6 is defined as Bh1 and the height of the apex is defined as Ah, the ratio of Ah to Bh1 is preferably 1.2 to 4.5.

In the case of the pneumatic tire for an electric vehicle having the steel carcass ply 5 disclosed in the present invention, as the turn-up process of the carcass ply in the bead portion is omitted, in order to prevent the carcass ply from separating when the casing is expanded during the molding process, the carcass ply layer is positioned between the inner bead bundle 6 and the outer bead bundles 7 and 8. In this case, the main purpose of the outer bead bundles 7 and 8 is to allow them to be seated on the rim, which plays a role of the conventional bead. Further, in the case of the inner bead bundle 6, it is possible to improve the balance of driving performance by holding the carcass ply layer and complementing to increase the rigidity of the bead portion as a steel insert through adjustment of the height. In addition, referring to FIG. 3, the carcass ply 5 is formed between the inner bead bundle 6 and the outer bead bundles 7 and 8 in an extended manner so as to penetrate therebetween. When the height of the inner bead bundle 6 is defined as Bh1 and the height of the apex is defined as Ah, in order to resolve the concentration of deformation energy, if satisfying a correlation equation between Ah and Bh1 of 1.2 < Ah/Bh1 < 4.5, stress concentration is minimized, such that it may have an excellent value of deformation energy of the bead portion and an optimal value of rolling resistance.

Next, in a product of 225/45 R17 tire, the rolling resistance and deformation energy value of the tires having Ah/Bh1 values of 0.2 and 5.5 as Comparative Examples 5 and 6 and the tires having Ah/Bh1 values of 1.2 to 4.5 as Examples 2 to 4 were measured and evaluated, and results thereof are shown in Table 4 below.

**[TABLE 4]**

| Item | Comparative Example 5 | Example 2 | Example 3 | Example 4 | Comparative Example 6 |
|---|---|---|---|---|---|
| Carcass | 2+7*0.095 | 2+7*0.095 | 2+7*0.095 | 2+7*0.095 | 2+7*0.095 |
| Bead portion | No turn-up | No turn-up | No turn-up | No turn-up | No turn-up |
| Ah/Bh1 | 0.2 | 1.2 | 2.5 | 4.5 | 5.5 |
| Deformati on energy | 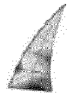 | 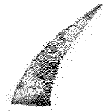 | 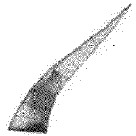 | 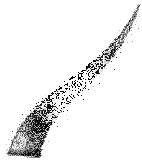 | 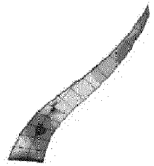 |
| | 87 | 97 | 100 | 94 | 83 |
| Rolling resistanc e | 96 | 99 | 100 | 98 | 95 |

It can be seen that the tire of Example 3 having an Ah/Bh1 value of 2.5 exhibits a rolling resistance values of 100 which is an optimal value, and the tires of Example 2 or 6 having an Ah/Bh1 value of 0.2 and 5.5 shows a tendency of decreasing the rolling resistance to 4% or more. In addition, it can also be confirmed that the deformation energy of the bead portion also exhibits a dominant result value in a range of 1.2 < Ah/Bh1 < 4.5.

In a product of 225/60 R18 tire, the rolling resistance and deformation energy values of tires having Ah/Bh1 values of 0.2 and 5.5 as Comparative Examples 7 and 8 and tires having Ah/Bh1 values of 1.2 to 4.5 as Examples 5 to 7 were measured and evaluated, and results thereof are shown in Table 5 below.

**[TABLE 5]**

| Item | Comparative Example 7 | Example 5 | Example 6 | Example 7 | Comparative Example 8 |
|---|---|---|---|---|---|
| Carcass | 2+7*0.095 | 2+7*0.095 | 2+7*0.095 | 2+7*0.095 | 2+7*0.095 |
| Bead portion | No turn-up | No turn-up | No turn-up | No turn-up | No turn-up |
| Ah/Bh1 | 0.2 | 1.2 | 2.5 | 4.5 | 5.5 |
| deformati on energy | 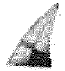 | 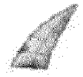 | 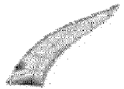 | 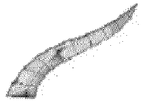 | 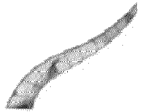 |
| | 84 | 96 | 100 | 97 | 86 |
| Rolling resistanc e | 94 | 98 | 100 | 98 | 96 |

As shown in Table 5 above, it can be confirmed that the tire having an Ah/Bh1 value of 2.5 exhibits the optimum rolling resistance value, and the tires having Ah/Bh1 values of 0.2 and 5.5 show a tendency of decreasing the rolling resistance to 4% or more. In addition, it can also be confirmed that the deformation energy of the bead portion also exhibits a dominant result value in a range of 1.2 < Ah/Bh1 < 4.5.

Although preferred embodiments of the present invention have been described with reference to the accompanying drawings, the embodiments and drawings described and illustrated in the present disclosure are simply the most preferred embodiment and do not represent all the technical sprites of the present invention, and it will be understood that various modifications and equivalents may be made to take the place of the embodiments at the time of filling the present application. Thus, it is clear that the above-described embodiments are illustrative in all aspects and do not limit the present disclosure. The scope of the present disclosure is defined by the following claims rather than by the detailed description of the embodiment. It shall be understood that all modifications and embodiments conceived from the meaning and scope of the claims and their equivalents are included in the scope of the present disclosure.

### [Description of Reference Numerals]

- 1, 2:: Fiber carcass ply
- 3:: Bead bundle
- 4:: Steel carcass ply
- 5:: Carcass ply
- 6:: Inner bead bundle
- 7:: First layer of outer bead bundle
- 8:: Second layer of outer bead bundle

## Claims

1. A pneumatic tire comprising a carcass ply,
wherein the carcass ply is formed between an inner liner and a sidewall of the tire in an extended manner while penetrating a bead portion.

2. The pneumatic tire according to claim 1,
wherein the bead portion comprises an inner bead bundle which is in contact with the inner liner about the carcass ply, and an outer bead bundle which is formed on a side opposite to the inner bead bundle.

3. The pneumatic tire according to claim 1,
wherein Ah/Bh1, which is a ratio of a height Bh1 of the inner bead bundle to a height Ah of an apex, is 1.2 to 4.5.

4. The pneumatic tire according to claim 1,
wherein the carcass ply may include a steel cord composed of an ultrafine wire having a filament diameter of 0.15 mm or less, and
wherein the steel cord has a breaking strength of 25 kgf or more.
